# EUROPÄISCHE PATENTANMELDUNG

(11) **EP 2 837 664 A1**
(43) Veröffentlichungstag der Anmeldung: **18.02.2015**
(21) Anmeldenummer: 14160622.8
(22) Anmeldetag: 19.03.2014
(51) Int. Cl.: C09D 5/00

(54) **Lichtabstoßendes Element**

(30) Priorität: 15.08.2013 RU 2013138079
(71) Anmelder: LLC SPHERASTEK, 39647 Voronezh region (RU)
(72) Erfinder: Kosyakov, Alexander V., 394051 Voronezh region (RU); Kuligin, Sergrey V., 394007 Voronezh region (RU); Rovovoy, Vadim V., 119027 Moscow region (RU); Salnikov, Evgeniy P., 394055 Voronezh region (RU); Homenko, Dmitriy V., 394055 Voronezh region (RU); Shubin, Vladimir I., 394088 Voronezh region (RU)
(74) Vertreter: Jeck, Anton

(57) **Zusammenfassung**

Die Erfindung betrifft ein lichtabstoßendes Element. Damit die Konstruktion vereinfacht, der Fertigungsaufwand gesenkt und die Koeffizienten der Retroreflexion und der Lichtreflexion erhöht sind, sieht die Erfindung vor, dass die Arbeitsoberfläche des Elements mit einem optischen Bleichmittel appretiert ist, dessen Schichtdicke 500 nm nicht überschreitet. Dabei sind als optische Bleichmittel in der Regel Stilbenderivate verwendet, denen ein Adhäsionsbeschleuniger, ein Lichtstabilisator, ein Fotosensibilisator und ein Hydrophobierungsmittel zugemischt sind.

## Beschreibung

Die Erfindung betrifft ein lichtabstoßendes Element.

Die Erfindung gehört zu den optischen Elementen und kann bei der Herstellung von lichtabstoßenden (retroreflektierenden und/oder lichtreflektierenden) Einrichtungen verwendet werden.

Der Retroreflexionseffekt wird in den Sicherungssystemen des Straßenverkehrs breit verwendet. Am häufigsten werden in der einheimischen Praxis retroreflektierende Stoffe verwendet, die Glasmikrokugeln enthalten, sowie Rückstrahler in Form von Prismen oder Mikroprismen. Die Qualität der Retroreflexion charakterisiert die Koeffizientgröße der Retroreflexion (des spezifischen Lichtkraftbeiwerts), die als ein Verhältnis der Reflexionsdichte des Musters zu seiner Beleuchtungsstärke berechnet und in Candela pro Lux und Quadratmeter (cd/lx*m2) gemessen wird.

Man unterscheidet drei Arten von Lichtreflexion: Spiegelreflexion, diffuse (zerstreute) und gemischte Reflexion (Spiegelreflexion und diffuse vereinigende Reflexion). Es ist üblich, die Erscheinung der Lichtreflexion (eine Situation, wenn das Licht, das auf die Oberfläche fällt, fast vollständig in Richtung der Lichtquelle zurück widerspiegelt wird) abgesondert zu betrachten. Die Retroreflexion und alle drei Arten der Lichtreflexion kann man zu einem einheitlichen Terminus einer Lichtabstoßung vereinigen.

Bekannt ist ein Verfahren zum Herstellen von Glasmikrosphären (das Patent auf die Erfindung der Russischen Föderation Nº2059574, MPK C03B 19/10, 1992 und die internationale Anmeldung PCT/RU96/00118, die Publikation WO 97/42127, MPK C03B 19/10, 1997), das das Kochen des Glases, das Herstellen von Mikropulver und die Bildung der Mikrosphären umfasst. Jedoch haben die von diesem bekannten Verfahren hergestellten Glasmikrosphären bei der Anwendung als reflektierende Elemente niedrige Koeffizienten der Lichtreflexion und der Retroreflexion.

Das nächstliegende Stand der Technik zu der Erfindung ist ein retroreflektierendes Element, das in Form einer bikonvexen Bestandlinse ausgebildet ist, die zwei Linsen aufnimmt, die untereinander mit sphärischer Oberfläche verbunden sind (das Patent auf die Erfindung der Russischen Föderation Nº2434255, MPK G02B 5/128, 2010). Die Mängel eines solchen lichtabstoßenden Elements sind die Komplexität der Konstruktion und der hohe Fertigungsaufwand. Außerdem hat diese bekannte Einrichtung niedrige Koeffizienten der Lichtreflexion und der Retroreflexion, da die ultraviolette Komponente des auf das lichtabstoßende Element fallenden Lichts für ihre Umgestaltung in sichtbares Licht nicht verwendet wird.

Es ist Aufgabe der Erfindung, die Konstruktion zu vereinfachen, den Fertigungsaufwand zu senken und die Koeffizienten der Retroreflexion und der Lichtreflexion zu erhöhen.

Die gestellte Aufgabe der Erfindung wird durch die Merkmale des Anspruchs 1 gelöst.

Dies ist dadurch erreicht, dass die Arbeitsoberfläche des lichtabstoßenden (retroreflektierenden und/oder lichtreflektierenden) Elements von einem optischen Bleichmittel appretiert ist, dessen Schichtdicke 500 nm nicht überschreitet. Die lichtabstoßenden Elemente können lichtreflektierend oder retroreflektierend sein oder dasselbe und ein anderes Verfahren der Wechselwirkung mit dem Licht vereinigen.

Die retroreflektierenden Elemente sind aus einem optisch durchsichtigen Stoff gebildet. Die lichtabstoßenden Elemente können z. B. für Straßen- und Bauarbeiten verwendet sein.

Das Auge des Menschen ist nur für ein bestimmtes Gebiet der elektromagnetischen Ausstrahlung empfindlich, das als sichtbares Spektrum gekennzeichnet ist und einen Umfang von Wellenlängen von 400 bis zu 700 nm umfasst. Die Ausstrahlungen, die sich außerhalb des sichtbaren Umfangs befinden, schließen ein infrarotes (Wellen mit der Länge mehr als 700 nm) und ein ultraviolettes Gebiet (weniger als 400 nm) ein. Die optischen Bleichmittel verfügen über eine Fähigkeit, die ultraviolette Komponente eines darauf fallenden Lichts auf dem Gebiet 300 - 400 nm zu absorbieren und die erhaltene Energie in den sichtbaren Teil des Spektrums (400 - 500 nm) umzuwandeln. Dank der Fluoreszenz wandeln die optischen Bleichmittel das im natürlichen Licht und im Licht vieler künstlicher Quellen enthaltene Ultraviolett in eine Ausstrahlung eines sichtbaren Umfangs um, damit die Fluoreszenz intensiver wird.

Vorteilhafte Weiterbildungen des lichtabstoßenden Elements sind den Unteransprüchen zu entnehmen.

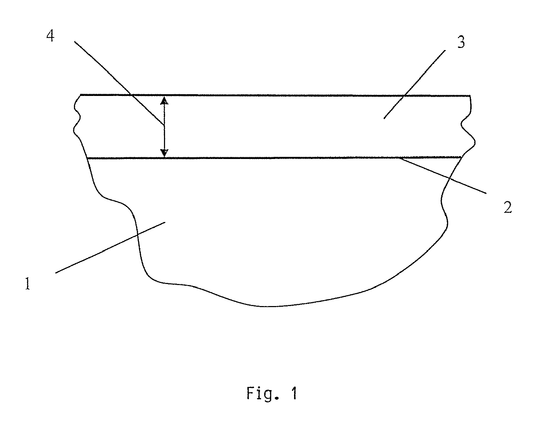

Die Erfindung wird anhand eines in der Fig. 1 dargestellten Ausführungsbeispiels näher erläutert.

In der Fig. 1 ist eine Arbeitsoberfläche 2 eines lichtabstoßenden (retroreflektierenden und/oder lichtreflektierenden) Elements 1 dargestellt, das mit einem optischen Bleichmittel 3 mit einer Schichtdicke 4 appretiert ist, die 500 nm nicht überschreitet.

Die retroreflektierenden Elemente stellen eine technologisch komplizierte Verbindung von Linsen dar, die einen Lichtstrahl in entgegengesetzter Richtung brechen, die in der Regel in Form von Glasmikrokugeln und Mikropyramiden ausgebildet sind. Und in diesem und in einem anderen Fall fällt das Licht von der Quelle auf die Oberfläche der Mikrolinse, wird gebrochen, von der inneren Oberfläche widerspiegelt und kehrt zur Quelle zurück. Dadurch ist ein optischer Effekt der Retroreflexion des Lichtstroms erreicht. Analog funktionieren die retroreflektierenden Elemente bei Beförderungsmitteln, wie Plast-, Auto-, Motorrad- und Fahrrad-Rückstrahlern. Aber dort sind nicht Mikro- sondern wesentlich größere Pyramiden verwendet. Alle retroreflektierenden Elemente sind aus einem optisch durchsichtigen Stoff ausgebildet.

Bei der Realisierung der Erfindung können jede (nach der Form der Ausführung und nach den Umfängen) lichtreflektierende Elemente verwendet werden.

Das Licht (z. B. von Scheinwerfern eines Autos), das auf das lichtabstoßende (retroreflektierende und/oder lichtreflektierende) Element 1 gerichtet ist, geht zuerst durch die Schicht des optischen Bleichmittels 3, wobei seine ultraviolette Komponente in den sichtbaren Teil des Spektrums (400 - 500 nm) umgewandelt wird. Sich weiter bewegend geht der Lichtstrom, der im sichtbaren Teil des Spektrums verstärkt ist, bis zur Arbeitsoberfläche 2 des lichtabstoßenden Elements 1. Wenn dies eine lichtreflektierende Variante der Ausführung des lichtabstoßenden Elements 1 ist, dann kehrt der verstärkte Lichtstrom, widerspiegelt (spiegelartig, diffus gemischt) von der Arbeitsoberfläche 2, durch die Schicht des optischen Bleichmittels 3 nach draußen zurück. Wenn dies eine retroreflektierende Variante der Ausführung des lichtabstoßenden Elements 1 ist, so geht der verstärkte Lichtstrom durch die Arbeitsoberfläche 2 ins Innere des optisch durchsichtigen Körperstoffs (der Linse) des retroreflektierenden Elements 1, wird von seiner inneren Oberfläche widergespiegelt und noch einmal durch die Schicht des optischen Bleichmittels 3 zur Lichtquelle zurück.

Als optisches Bleichmittel 3 sind in der Regel Stilbenderivate, z. B. die Präparate «Belofor OJIA», «Ljuksafor 093» oder "Optiblanc WS» verwendet. Maximal hohe Kennziffern von Koeffizienten der Retroreflexion und der Lichreflexion des lichtabstoßenden Elements 1 sind in dem Fall erreicht, wenn die Lage des Hauptmaximums der Fotolumineszenz des optischen Bleichmittels 3 im Bereich von 510 - 550 nm liegt.

Für die Verbesserung der Adhäsion des optischen Bleichmittels 3 auf dem lichtabstoßenden Element 1 ist in das optische Bleichmittel 3 ein Adhäsionsbeschleuniger zugemischt, z. B. diaminfunktioneller Adhäsionsbeschleuniger Aminoäthylaminopropiltrimetoxysilan, mehrfunktionale Aminosilane "Penta-65" und "Penta-69", das Silan "Silquest A-1110».

Für die Erhöhung der Lichtbeständigkeit des optischen Bleichmittels 3 und des Körperstoffs (der Linse) des lichtabstoßenden Elements 1 ist in das optische Bleichmittel 3 ein Lichtstabilisator (Fotostabilisator) zugemischt, z. B. "Fenosan 23», «Irganoks 1010», «Benasol P», «Tinuwin 327».

Da sich eine kurzwellige UV-Ausstrahlung auf die Mehrheit von Stoffen negativer auswirkt als die Langwellenausstrahlung, so kann man ihre Zuverlässigkeit und die Laufzeit erhöhen, wenn man einen Kaskadenmechanismus der Versetzung (Migration) der Energie im Stoff gewährleistet. Für die Realisierung der angegebenen Energietransportmechanismen sind Fotosensibilisatoren verwendet, die eine kurz-wellige UV-Ausstrahlung absorbieren und dem optischen Bleichmittel weiterleiten. Die gemeinsame Anwendung der Fotosensibilisatoren und der optischen Bleichmittel lässt zu, den Umfang der absorbierten Energie auszudehnen, die Koeffizienten der Retroreflexion und der Lichtreflexion des lichtabstoßenden Elements 1 zu erhöhen sowie die Lichtbeständigkeit des optischen Bleichmittels 3 und des Körperstoffs (der Linse) des lichtabstoßenden Elements 1 zu garantieren. Als Fotosensibilisator kann Salizylsäure, p-Naphtylamin, R-Salz oder G-Salz verwendet sein.

Für die Verbesserung der wasserabstoßenden Eigenschaften des optischen Bleichmittels 3 und der Erhöhung seiner Laufzeit und der Frostresistenz sind in das optische Bleichmittel 3 Hydrophobierungsmittel zugemischt, die hauptsächlich aus Organosiliziumverbindungen, z. B. «BIONIK MBO», «KRISTALLIZOL», «Chelsea Stone», bestehen.

Infolge durchgeführter Experimente, in deren Verlauf sich die Koeffizienten der Retroreflexion und der Lichtreflexion für entsprechende lichtabstoßende Elemente 1 klärten, ist festgestellt worden, dass die Schichtdicke des optischen Bleichmittels 3 500 nm nicht überschreiten soll, da je nach der Vergrößerung der Schichtdicke des optischen Bleichmittels 3 die Koeffizienten der Retroreflexion und der Lichtreflexion des lichtabstoßenden Elements 1 zuerst zunehmen. Dann gehen die Koeffizienten bis zu den Höchstgrößen und beginnen danach, sich zu verringern. Die optimale Schichtdicke des optischen Bleichmittels 3 (je nach dem Körperstoff des lichtabstoßenden Elements 1, der Art (der Marke) des optischen Bleichmittels 3 sowie des Adhäsionsbeschleunigers, des Lichtstabilisators, des Fotosensibilisators und des Hydrophobierungsmittels) ist 20 - 300 nm. In diesem Fall wachsen die Koeffizienten der Retroreflexion und der Lichtreflexion des lichtabstoßenden Elements 1 um 15 - 18 %.

## Patentansprüche

1. Lichtabstoßendes Element (1),
**dadurch gekennzeichnet,**
**dass** seine Arbeitsoberfläche (2) mit einem optischen Bleichmittel (3) appretiert ist.

2. Lichtabstoßendes Element (1) nach Anspruch 1,
**dadurch gekennzeichnet,**
**dass** die Schichtdicke (4) des optischen Bleichmittels (3) 500 nm nicht überschreitet.

3. Lichtabstoßendes Element (1) nach Anspruch 1 und 2,
**dadurch gekennzeichnet,**
**dass** das optische Bleichmittel (3) die Fähigkeit besitzt, die ultraviolette Komponente eines darauf fallenden Lichts auf einem Gebiet von 300 - 400 nm zu absorbieren und die dabei erhaltene Energie in einen sichtbaren Teil des Spektrums von 400 - 500 nm umzuwandeln.

4. Lichtabstoßendes Element (1) nach Anspruch 1 bis 3,
**dadurch gekennzeichnet,**
**dass** als optisches Bleichmittel (3) in der Regel Stilbenderivate, z. B. Präparate «Belofor OJIA», «Ljuksafor 093» oder "Optiblanc WS», verwendet sind.

5. Lichtabstoßendes Element (1) nach Anspruch 1 bis 4,
**dadurch gekennzeichnet,**
**dass** in das optische Bleichmittel (3) zur Verbesserung der Adhäsion auf dem Element (1) ein Adhäsionsbeschleuniger, z. B. diaminfunktioneller Adhäsionsbe-schleuniger Aminoäthylaminopropiltrimetoxysilan, mehrfunktionale Aminosilane "Penta-65" und "Penta-69", das Silan "Silquest A-1110», zugemischt ist.

6. Lichtabstoßendes Element (1) nach Anspruch 1 bis 5,
**dadurch gekennzeichnet,**
**dass** in das optische Bleichmittel (3) zur Erhöhung der Lichtbeständigkeit von Bleichmittel (3) und Element (1) ein Lichtstabilisator, z. B. "Fenosan 23», «Irganoks 1010», «Benasol P», «Tinuwin 327», zugemischt ist.

7. Lichtabstoßendes Element (1) nach Anspruch 1 bis 6,
**dadurch gekennzeichnet,**
**dass** zur Ausdehnung des Umfangs der absorbierten Energie und zur Erhöhung der Koeffizienten der Retroreflexion und der Lichtreflexion des Elements (1) sowie der Lichtbeständigkeit des Bleichmittels (3) und des Elements (1) das optische Bleichmittel (3) zusammen mit einem Fotosensibilisatoren verwendet ist, wobei als Fotosensibilisator Salizylsäure, p-Naphtylamin, R-Salz oder G-Salz verwendet ist.

8. Lichtabstoßendes Element (1) nach Anspruch 1 bis 7,
**dadurch gekennzeichnet,**
**dass** zur Verbesserung der wasserabstoßenden Eigenschaften des Bleichmittels (3) und zur Erhöhung seiner Laufzeit und Frostresistenz in das optische Bleichmittel (3) ein Hydrophobierungsmittel, z. B. «BIONIK MBO», «KRISTALLIZOL», «Chelsea Stone», zugemischt ist.
